# EUROPEAN PATENT APPLICATION

(11) **EP 4 661 187 A1**
(43) Date of publication of application: **10.12.2025**
(21) Application number: 24872686.1
(22) Date of filing: 19.07.2024
(51) Int. Cl.: H01M 50/383, H01M 50/342, H01M 50/375, H01M 10/6556, H01M 10/613, H01M 10/625, H01M 50/249

(54) **BATTERY PACK AND VEHICLE COMPRISING SAME**

(30) Priority: 26.09.2023 KR 20230129707
(71) Applicant: LG Energy Solution, Ltd., Seoul 07335 (KR)
(72) Inventor: JUNG, In-Hyuk, Daejeon 34122 (KR); PARK, So-Jeong, Daejeon 34122 (KR); SONG, Jong-Min, Daejeon 34122 (KR); AHN, Jun-Young, Daejeon 34122 (KR); OH, Kwang-Keun, Daejeon 34122 (KR); LEE, Yong-Ho, Daejeon 34122 (KR); YANG, Jin-Oh, Daejeon 34122 (KR)
(74) Representative: Goddar, Heinz J.
(86) International application number: PCT/KR2024/010512
(87) International publication number: WO 2025/070976

(57) **Abstract**

Disclosed is a battery pack, which includes a plurality of battery cells having a venting portion, and a pack frame configured to accommodate the plurality of battery cells and having a venting guide portion in an area corresponding to the venting portion of the plurality of battery cells.

## Description

### TECHNICAL FIELD

The present application claims priority to Korean Patent Application No. 10-2023-0129707 filed on September 26, 2023 in the Republic of Korea, the disclosures of which are incorporated herein by reference.

The present disclosure relates to a battery pack and a vehicle including the battery pack, and more particularly, to a battery pack with improved thermal safety and a vehicle including the battery pack

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing energy efficiency and environment friendliness in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.2V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module composed of at least one battery cell first, and then configure a battery pack by using at least one battery module and adding other components.

The conventional battery pack includes a plurality of battery cells and a pack frame that accommodates the battery cells. In the conventional battery pack, in terms of securing energy density and capacity, the plurality of battery cells are arranged relatively densely within the pack case. In this structure, when a thermal event occurs a specific battery cell, for example when gas or flame due to overheating of the battery cell is emitted, there is a relatively serious problem that heat propagates to adjacent surrounding battery cells if the gas or flame is not vented quickly.

Therefore, it is necessary to find a way to prevent heat propagation to adjacent battery cells when a thermal event occurs in a battery cell.

### DISCLOSURE

### Technical Problem

Therefore, the present disclosure is directed to providing a battery pack that may prevent heat propagation to adjacent battery cells when a thermal event occurs in a battery cell, and a vehicle including the battery pack.

In addition, the present disclosure is directed to providing a battery pack that may simplify the manufacturing process and reduce manufacturing costs, and a vehicle including the battery pack.

However, the technical problems that the present disclosure seeks to solve are not limited to the above, and other problems not mentioned herein will be clearly understood by those skilled in the art from the following description.

### Technical Solution

In one aspect of the present disclosure, there is provided a battery pack, comprising: a plurality of battery cells having a venting portion; and a pack frame configured to accommodate the plurality of battery cells and having a venting guide portion in an area corresponding to the venting portion of the plurality of battery cells.

Also, preferably, the venting guide portion may be formed to have a smaller thickness than other parts of the pack frame so as to rupture or melt at a predetermined pressure or temperature or above.

Also, preferably, the venting portion may be provided at a bottom of the plurality of battery cells, and the venting guide portion may be provided at a bottom of the pack frame.

Also, preferably, the venting guide portion may have a smaller thickness than a bottom of the pack frame.

Also, preferably, the venting guide portion may be provided in a number corresponding to the number of the plurality of battery cells.

Also, preferably, the pack frame may be provided as an integrated plastic frame.

Also, preferably, the venting guide portion may be formed integrally with the pack frame.

Also, preferably, the venting guide portion may be provided in a notch shape at a bottom of the pack frame.

Also, preferably, the battery pack may further comprise a plurality of cooling tubes arranged in a predetermined length between the plurality of battery cells and spaced apart from each other by a predetermined distance, and the pack frame may include a plurality of tube supports that support the plurality of cooling tubes.

Also, preferably, the venting guide portion may be provided between the plurality of tube supports.

Also, preferably, the plurality of tube supports may be formed in a predetermined length along a longitudinal direction of the cooling tube and have a groove shape with a predetermined depth.

Also, preferably, ends of the plurality of cooling tubes may be connected to an external cooling line of the battery pack and have a cooling medium inlet/outlet to supply a cooling medium into the cooling tube and export the cooling medium inside the cooling tube to the outside, and the ends of the plurality of cooling tubes may be exposed to the outside of the pack frame.

Also, preferably, at least one flange portion may be formed integrally with at least one edge of the pack frame.

Also, preferably, the flange portion may be provided in plurality, and the plurality of flange portions may be arranged to be spaced apart from each other by a predetermined distance along both edges of the pack frame.

In addition, the present disclosure also provides a vehicle, comprising at least one battery pack according to the former embodiments.

### Advantageous Effects

According to various embodiments as above, it is possible to provide a battery pack that may prevent heat propagation to adjacent battery cells when a thermal event occurs in a battery cell, and a vehicle including the battery pack.

In addition, according to various embodiments as above, it is possible to provide a battery pack that may simplify the manufacturing process and reduce manufacturing costs, and a vehicle including the battery pack.

Moreover, various other additional effects may be achieved by various embodiments of the present disclosure. The various effects of the present disclosure will be explained in detail in each embodiment, or the effects that can be easily understood by those skilled in the art will not be described herein.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery pack according to an embodiment of the present disclosure.
FIG. 2 is an exploded perspective view showing the battery pack according to an embodiment of the present disclosure.
FIG. 3 is a drawing for illustrating a battery cell of the battery pack according to an embodiment of the present disclosure.
FIG. 4 is a partial cross-sectional view showing the internal structure of the battery cell of the battery pack according to an embodiment of the present disclosure.
FIG. 5 is a partial cross-sectional view showing the upper structure of the battery cell of the battery pack according to an embodiment of the present disclosure.
FIG. 6 is a partial cross-sectional view showing the lower structure of the battery cell of the battery pack according to an embodiment of the present disclosure.
FIG. 7 is a bottom view showing the battery cell of the battery pack according to an embodiment of the present disclosure.
FIG. 8 is a perspective view showing a pack frame of the battery pack according to an embodiment of the present disclosure.
FIG. 9 is a plan view showing the pack frame of the battery pack according to an embodiment of the present disclosure.
FIG. 10 is a side view showing the pack frame of the battery pack according to an embodiment of the present disclosure.
FIG. 11 is a diagram for illustrating a pack frame according to another embodiment of the battery pack according to an embodiment of the present disclosure.
FIG. 12 is a cross-sectional view showing the main part of the battery pack according to an embodiment of the present disclosure.
FIG. 13 is a diagram for illustrating gas emission from the battery cell when a thermal event occurs in the battery pack according to an embodiment of the present disclosure.
FIGS. 14 to 16 are diagrams for illustrating the process of manufacturing the battery pack according to an embodiment of the present disclosure.
FIG. 17 is a drawing for illustrating a battery pack according to another embodiment of the present disclosure.
FIG. 18 is a diagram for illustrating gas emission from a battery cell when a thermal event occurs in the battery pack according to another embodiment of the present disclosure.
FIG. 19 is a drawing for illustrating a battery pack according to still another embodiment of the present disclosure.
FIG. 20 is a diagram for illustrating gas emission from a battery cell when a thermal event occurs in the battery pack according to still another embodiment of the present disclosure.
FIG. 21 is a drawing for illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art these terms may vary depending on the location of a target object or the location of an observer.

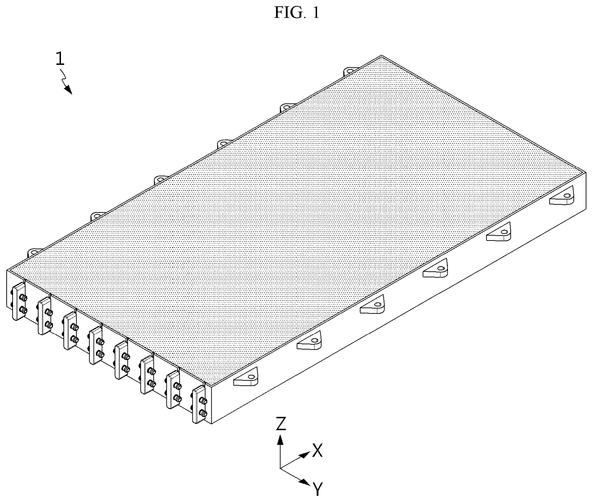

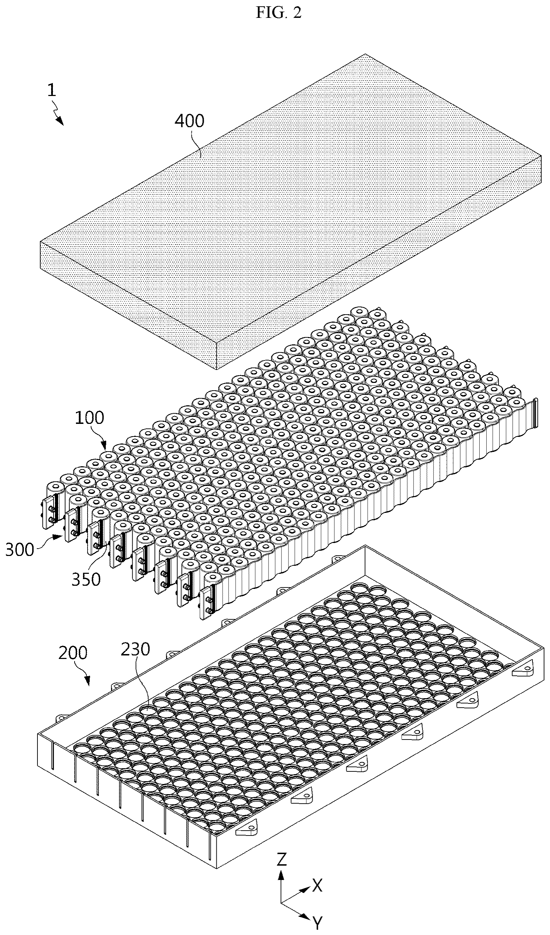

FIG. 1 is a diagram for illustrating a battery pack according to an embodiment of the present disclosure, and FIG. 2 is an exploded perspective view showing the battery pack according to an embodiment of the present disclosure.

Referring to FIGS. 1 and 2, the battery pack 1 may include a plurality of battery cells 100 and a pack frame 200.

The plurality of battery cells 100 are secondary batteries and may be provided as cylindrical secondary batteries, pouch-shaped secondary batteries, or prismatic secondary batteries. Hereinafter, in this embodiment, the plurality of battery cells 100 will be described as being provided as cylindrical secondary batteries.

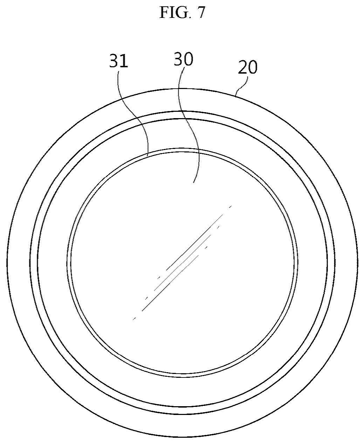

The plurality of battery cells 100 may have a venting portion 31 (see FIG. 7). The venting portion 31 may guide gas or flame generated in abnormal situations such as overheating to the outside of the battery cell 100. When an abnormal situation occurs in the battery cell 100, gas or flame generated inside the battery cell 100 may escape to the outside of the battery cell 100 through the venting portion 31. The venting portion 31 will be explained in more detail below.

The pack frame 200 may accommodate the plurality of battery cells 100. The pack frame 200 may have a venting guide portion 230 in an area corresponding to the venting portion 31 of the plurality of battery cells 100. The venting guide portion 230 may guide gas or flame coming out of the venting portion 31 to the outside of the pack frame 200.

In the battery pack 1 according to an embodiment of the present disclosure, when an abnormal situation occurs in the battery cell 100, gas or flame coming out of the venting portion 31 of the battery cell 100 may be exported to the outside of the pack frame 200 more quickly and rapidly through the venting guide portion 230 provided at an area corresponding to the venting portion 31.

Therefore, the battery pack 1 according to an embodiment of the present disclosure may guide smoother and faster venting of gas or flame generated from the battery cell 100 when an abnormal situation occurs, thereby effectively preventing the risk of thermal runaway damage to neighboring battery cells 100.

Hereinafter, the battery cell 100 according to an embodiment of the present disclosure will be described in more detail.

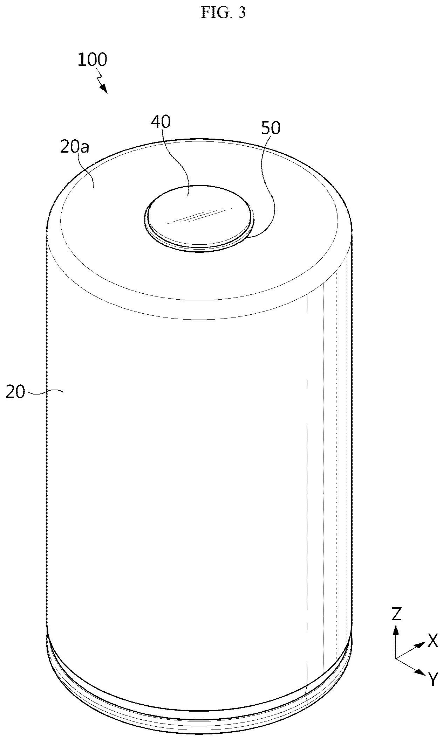

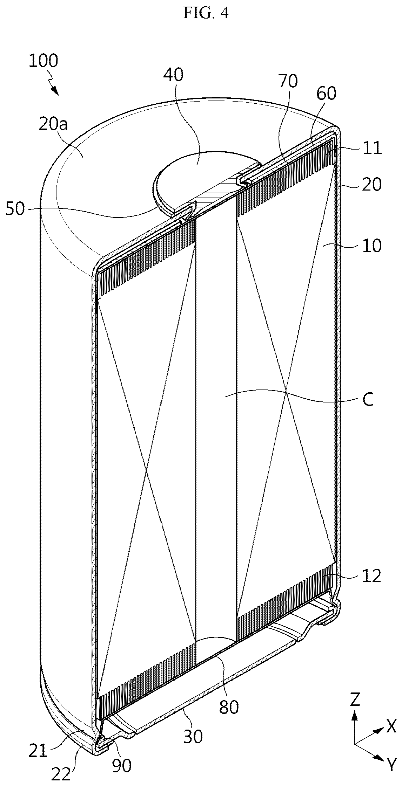

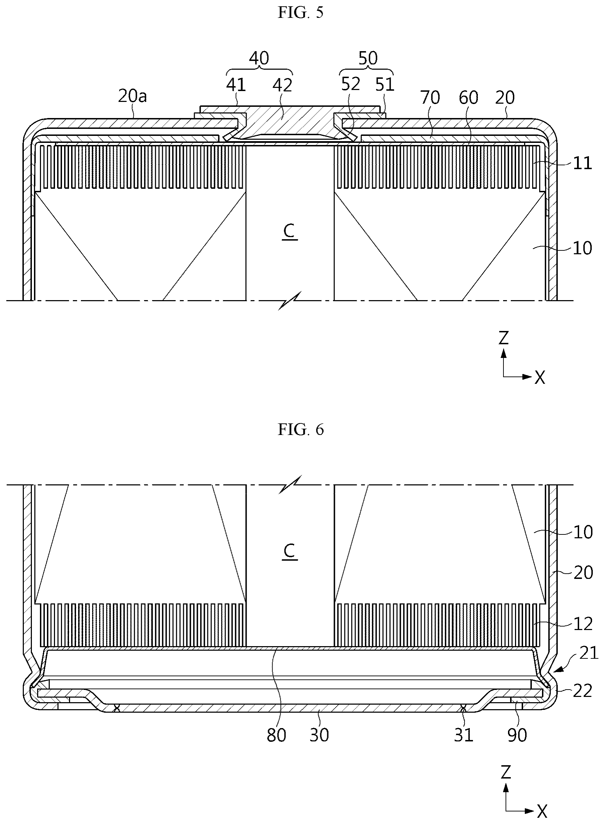

FIG. 3 is a drawing for illustrating a battery cell of the battery pack according to an embodiment of the present disclosure, FIG. 4 is a partial cross-sectional view showing the internal structure of the battery cell of the battery pack according to an embodiment of the present disclosure, FIG. 5 is a partial cross-sectional view showing the upper structure of the battery cell of the battery pack according to an embodiment of the present disclosure, FIG. 6 is a partial cross-sectional view showing the lower structure of the battery cell of the battery pack according to an embodiment of the present disclosure, and FIG. 7 is a bottom view showing the battery cell of the battery pack according to an embodiment of the present disclosure.

Referring to FIGS. 3 to 7, the battery cell 100 includes an electrode assembly 10, a battery can 20, a cap plate 30, and a first electrode terminal 40. In addition to the above-described components, the battery cell 100 may further include an insulation gasket 50 and/or an upper current collection plate 60 and/or an insulation plate 70 and/or a lower current collection plate 80 and/or a sealing gasket 90.

The electrode assembly 10 includes a first electrode plate with a first polarity, a second electrode plate with a second polarity, and a separator interposed between the first electrode plate and the second electrode plate. The first electrode plate is a positive electrode plate or a negative electrode plate, and the second electrode plate corresponds to an electrode plate with a polarity opposite to that of the first electrode plate.

The electrode assembly 10 may have, for example, a jelly-roll shape. That is, the electrode assembly 10 may be manufactured by winding a stack, which is formed by sequentially stacking a first electrode plate, a separator, and a second electrode plate at least once, based on a winding center C. In this case, the separator may be provided on the outer peripheral surface of the electrode assembly 10 for insulation from the battery can 20.

The first electrode plate includes a first electrode current collector and a first electrode active material applied on one or both sides of the first electrode current collector. An uncoated portion where the first electrode active material is not applied is present at one end of the first electrode current collector in the width direction (direction parallel to the Z-axis). The uncoated portion functions as a first electrode tab. The first electrode tab 11 is provided at the upper portion in the height direction (direction parallel to the Z-axis) of the electrode assembly 10 accommodated within the battery can 20.

The second electrode plate includes a second electrode current collector and a second electrode active material applied on one or both sides of the second electrode current collector. An uncoated portion where the second electrode active material is not applied is present at the other end of the second electrode current collector in the width direction (direction parallel to the Z-axis). The uncoated portion functions as a second electrode tab 12. The second electrode tab 12 is provided at the lower portion in the height direction (direction parallel to the Z-axis) of the electrode assembly 10 accommodated within the battery can 20.

The battery can 20 is a cylindrical receptor with an opening formed at the bottom, and is made of a conductive metal material. The side and top sides of the battery can 20 are formed as one piece. The top side of the battery can 20 has an approximately flat shape. The battery can 20 accommodates the electrode assembly 10 through the opening formed at the bottom, and also accommodates an electrolyte together.

The battery can 20 is electrically connected to the second electrode tab 12 of the electrode assembly 10. Therefore, the battery can 20 has the same polarity as the second electrode tab 12.

The battery can 20 may include a beading portion 21 and a crimping portion 22 formed at its lower end. The beading portion 21 is formed below the electrode assembly 10. The beading portion 21 is formed by press-fitting the outer peripheral surface of the battery can 20. The beading portion 21 prevents the electrode assembly 10, which has a size corresponding to the width of the battery can 20, from coming out through the opening formed at the bottom of the battery can 20, and may function as a support on which the cap plate 30 is seated.

The crimping portion 22 is formed below the beading portion 21. The crimping portion 22 has an extended and bent shape to surround the outer peripheral surface of the cap plate 30 disposed below the beading portion 21 and a part of the lower surface of the cap plate 30.

The cap plate 30 is a component made of a conductive metal material and covers the opening formed at the bottom of the battery can 20. In other words, the cap plate 30 forms the lower surface of the battery cell 100. The cap plate 30 is seated on the beading portion 21 formed on the battery can 20 and is fixed by the crimping portion 22. The sealing gasket 90 may be interposed between the cap plate 30 and the crimping portion 22 of the battery can 20 to ensure airtightness of the battery can 20.

The cap plate 30 may further include a venting portion 31 formed to prevent an internal pressure from increasing due to gas generated inside the battery can 20. The venting portion 31 corresponds to an area of the cap plate 30 that has a greater thickness than the surrounding area. The venting portion 31 is structurally weak compared to the surrounding area. Therefore, if an abnormality occurs in the battery cell 100 and the internal pressure increases to a certain level or above, the venting portion 31 ruptures so that the gas generated inside the battery can 20 is discharged.

A hole may be formed in advance in the upper surface of the battery can 20, before the first electrode terminal 40 and the insulation gasket 50 are disposed. Without being limited thereto, the hole may also be formed in other ways. For example, a hole may be formed as the first electrode terminal 40 is inserted, a hole with a different diameter may be formed in advance, or the upper surface may be notched or pre-notched so that the first electrode terminal 40 may be inserted therein. In other words, the hole may be expanded to a desired size, or a notch may be pierced to create a small hole and then the hole may be expanded to a desired size. In addition, of course, the hole may be formed in other ways.

The battery cell 100 according to an embodiment of the present disclosure has a structure in which both the positive electrode terminal and the negative electrode terminal are present at the top, which makes the top structure more complex than the bottom structure. Therefore, the venting portion 31 may be formed on the cap plate 30 forming the lower surface of the battery cell 100 so that the gas generated inside the battery can 20 is smoothly discharged.

The venting portion 31 may be formed continuously in a circle shape on the cap plate 30. Without being limited thereto, the venting portion 31 may be formed discontinuously in a circle shape on the cap plate 30, or may be formed in a straight line or other shapes.

The first electrode terminal 40 is made of a conductive metal material, passes through the top surface of the battery can 20, and is electrically connected to the first electrode tab 11 of the electrode assembly 10. Therefore, the first electrode terminal 40 has the first polarity. The first electrode terminal 40 is electrically isolated from the battery can 20 having the second polarity.

The first electrode terminal 40 includes an exposure terminal portion 41 and an insert terminal portion 42. The exposure terminal portion 41 is exposed to the outside of the battery can 20. The exposure terminal portion 41 is located in the center of the upper surface of the battery can 20. The insert terminal portion 42 passes through the center of the upper surface of the battery can 20 and is electrically connected to the first electrode tab 11. The insert terminal portion 42 may be riveted onto the inner surface of the battery can 20.

The upper surface of the battery can 20 and the first electrode terminal 40 have opposite polarities and face the same direction. Also, a step may be formed between the first electrode terminal 40 and the upper surface of the battery can 20. Specifically, if the entire upper surface of the battery can 20 has a flat shape or a shape that protrudes upward from its center, the exposed terminal portion 41 of the first electrode terminal 40 may protrude further upward than the upper surface of the battery can 20. On the contrary, in the case where the upper surface of the battery can 20 has a concave indented shape downward from its center, namely in a direction toward the electrode assembly 10, the upper surface of the battery can 20 may protrude further upward than the exposed terminal portion 41 of the first electrode terminal 40.

The insulation gasket 50 is interposed between the battery can 20 and the first electrode terminal 40 to prevent the battery can 20 and the first electrode terminal 40, which have opposite polarities, from contacting each other. As a result, the upper surface of the battery can 20, which has a roughly flat shape, may function as the second electrode terminal of the battery cell 100.

The insulation gasket 50 includes an exposure portion 51 and an insert portion 52. The exposure portion 51 is located between the exposure terminal portion 41 of the first electrode terminal 40 and the battery can 20. The insert portion 52 is interposed between the insert terminal portion 42 of the first electrode terminal 40 and the battery can 20. The insulation gasket 50 may be made of, for example, an insulating resin material.

In the case where the insulation gasket 50 is made of a resin material, the insulation gasket 50 may be coupled with the battery can 20 and the first electrode terminal 40, for example, by heat fusion. In this case, the airtightness at the coupling interface between the insulation gasket 50 and the first electrode terminal 40 and the coupling interface between the insulation gasket 50 and the battery can 20 may be strengthened.

The entire upper surface of the battery can 20, excluding the area occupied by the first electrode terminal 40 and the insulation gasket 50, corresponds to the second electrode terminal 20a, which has an opposite polarity to the first electrode terminal 40.

The battery cell 100 according to an embodiment of the present disclosure includes the first electrode terminal 40 having the first polarity and provided on one side in the longitudinal direction (direction parallel to the Z-axis) and the second electrode terminal 20a electrically insulated from the first electrode terminal 40 and having the second polarity together. That is, in the battery cell 100 according to an embodiment of the present disclosure, since a pair of electrode terminals 40, 20a are located in the same direction, when electrically connecting the plurality of battery cells 100, electrical connection components such as a bus bar assembly may be disposed on only one side of the battery cells 100. This may simplify the structure of the battery pack 1 and improve energy density.

Hereinafter, the pack frame 200 according to an embodiment of the present disclosure will be described in more detail.

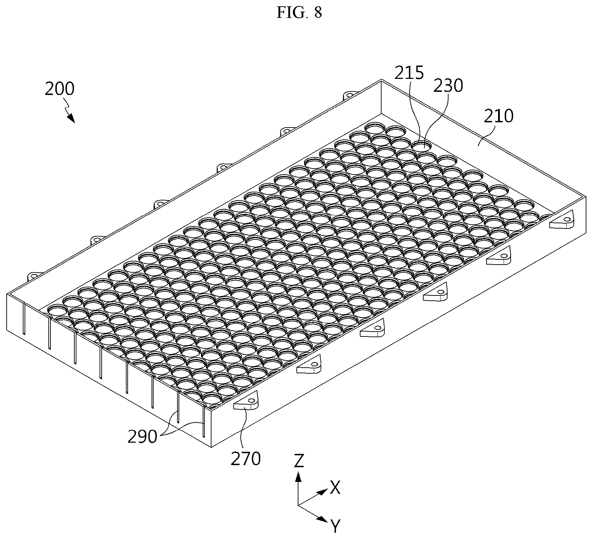

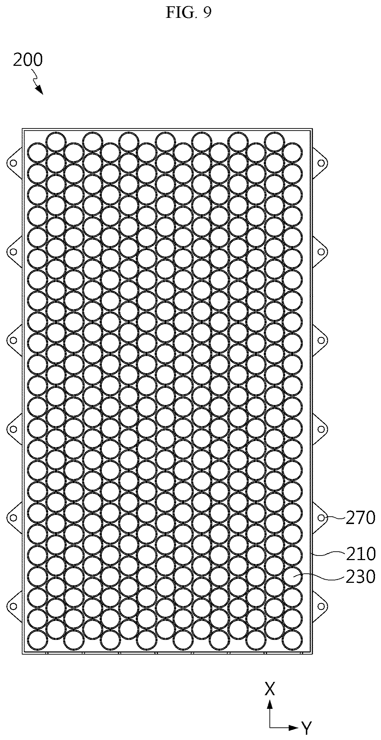

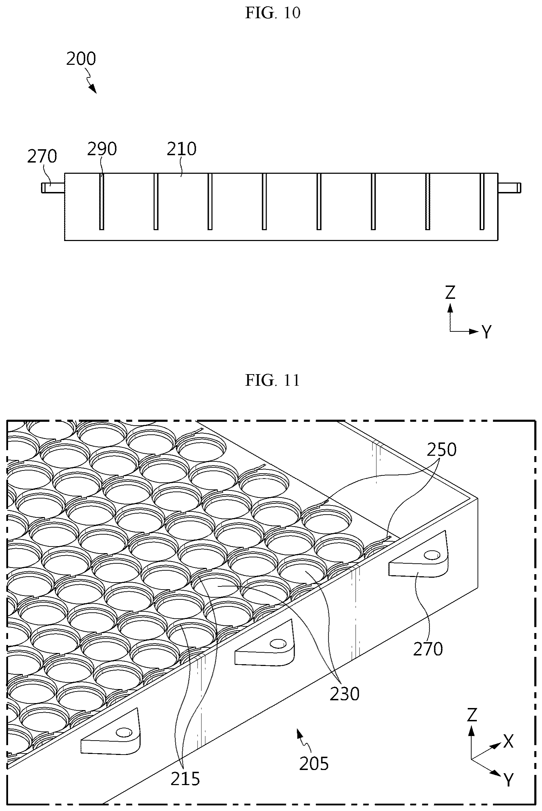

FIG. 8 is a perspective view showing a pack frame of the battery pack according to an embodiment of the present disclosure, FIG. 9 is a plan view showing the pack frame of the battery pack according to an embodiment of the present disclosure, and FIG. 10 is a side view showing the pack frame of the battery pack according to an embodiment of the present disclosure.

Referring to FIGS. 8 to 10, the pack frame 200 may include a frame body 210 and the venting guide portion 230.

The frame body 210 may have an accommodating space of a predetermined size capable of accommodating the battery cells 100. The venting guide portion 230 may be provided on the frame body 210.

The venting guide portion 230 may be formed to have a smaller thickness than other parts of the frame body 210 of the pack frame 200 so as to rupture or melt at a predetermined pressure or temperature or above. For example, the venting guide portion 230 may be provided in a notch shape at the bottom of the frame body 210 of the pack frame 200.

Meanwhile, as described above, the venting portion 230 is provided at the bottom (-Z-axis direction) of the plurality of battery cells 100, and the venting guide portion 230 may be provided at the bottom of the frame body 210 of the pack frame 200. Here, the venting guide portion 230 may have a smaller thickness than the bottom of the frame body 210 of the pack frame 200.

The venting guide portion 230 may be provided in a number corresponding to the number of the plurality of battery cells 100. Accordingly, the venting guide portion 230 may cover all of the venting portions 31 of the battery cells 100.

The pack frame 200 may be provided as an integrated plastic frame. The venting guide portion 230 may be formed integrally with the frame body 210 of the pack frame 200. That is, the venting guide portion 230 may be formed as one body in the frame body 210.

The venting guide portion 230 may be formed to be depressed from the bottom of the frame body 210 to a predetermined depth. Accordingly, the venting guide portion 230 may have a predetermined guide space S in the height direction (Z-axis direction) of the pack frame 200. The guide space S may be formed to face the venting portion 31 of the battery cell 100. The guide space S may guide directional venting of gas or flame coming out of the venting portion 31.

Meanwhile, a cell support 215 may be formed in the frame body 210 to support the bottom edge of the battery cells 100. The cell support 215 may be provided in plurality corresponding to the number of the battery cells 100. The cell support 215 may be formed to have a predetermined depth from the bottom of the frame body 210.

The cell support 215 may support the bottom edge of the battery cells 100. For this purpose, the width of the cell support 215 may be formed to correspond to the outer diameter of the bottom edge of the battery cells 100.

The venting guide portion 230 may be depressed to a predetermined depth from the cell support 215 to form the guide space S. The venting guide portion 230 may have a width smaller than the bottom edge of the battery cells 100. Also, the venting guide portion 230 may have a predetermined width to expose the venting portion 31 of the battery cells 100 on the guide space S.

Referring to FIG. 2 and FIGS. 8 to 10 again, the battery pack 1 may include a plurality of cooling tubes 300.

The plurality of cooling tubes 300 are for cooling the plurality of battery cells 100, and are arranged in a predetermined length between the plurality of battery cells 100, and may be spaced apart from each other by a predetermined distance.

A cooling medium inlet/outlet 350 connected to an external cooling line of the battery pack 1 and configured to supply a cooling medium into the cooling tube 300 and export the cooling medium inside the cooling tube 300 to the outside may be provided at the end of the plurality of cooling tubes 300.

The ends of the plurality of cooling tubes 300 may be exposed to the outside of the pack frame. Therefore, the cooling medium inlet/outlet 350 provided at the end of the plurality of cooling tubes 300 may be connected more conveniently and easily to the external cooling line.

The pack frame 200 will be described in more detail.

The pack frame 200 may include a flange portion 270. The flange portion 270 is used to guide the connection between the battery pack 1 and a vehicle V, explained later, or between the battery packs 1, and may be provided on at least one edge of the pack frame 200. Specifically, the flange portion 270 may be provided on at least one edge of the frame body 210 of the pack frame 200. The flange portion 270 may be formed integrally with the frame body 210 of the pack frame 200. Accordingly, in an embodiment of the present disclosure, the flange portion 270 may be provided as one body in the pack frame 200 rather than as a separate member.

The flange portion 270 may be provided in plurality. The plurality of flange portions 270 may be arranged to be spaced apart from each other by a predetermined distance along both edges of the pack frame 200.

The pack frame 200 may include a tube slit 290. The tube slit 290 is intended to guide the ends 350 of the plurality of cooling tubes 300 to the outside of the pack frame 200, and may be provided on one side of the frame body 210.

The tube slit 290 may be provided in the shape of a groove elongated in a predetermined length along the height direction (Z-axis direction) of one side of the frame body 210. The tube slits 290 may provided in a number corresponding to the number of the plurality of cooling tubes 300, and may be arranged to be spaced apart from each other by a predetermined distance.

Seeing the battery pack 1 again, the battery pack 1 may include a filler member 400.

The filler member 400 may be filled within the pack frame 200. The filler member 400 may more stably fix the plurality of battery cells 100 and increase the heat dissipation efficiency of the plurality of battery cells 100, thereby further improving the cooling performance of the battery cells 100.

The filler member 400 may be provided as a potting resin. The potting resin may be formed by injecting a diluted resin material into the plurality of battery cells 100 and curing the resin material. Here, the resin material may be injected at room temperature of approximately 15 to 25°C to prevent heat damage to the plurality of battery cells 100.

Specifically, the filler member 400 may be made of silicone resin. Without being limited thereto, of course, the filler member 400 may be made of other resin materials that can improve the fixation and heat dissipation efficiency of the battery cells 100, in addition to the silicone resin.

More specifically, since the filler member 400 covers the part of the battery cells 100 that is not in contact with the cooling tube 300, it is possible to guide the thermal balance of the battery cells 100, thereby preventing cooling deviation of the battery cells 100 and preventing local deterioration of the battery cells 100. By preventing local deterioration of the battery cells 100, the safety of the battery cells 100 may also be significantly improved.

In addition, the filler member 400 may perform an insulating role to prevent electricity from flowing to neighboring battery cells 100 when at least one specific battery cell 100 among the plurality of battery cells 100 ruptures or the like due to an abnormal situation.

Also, the filler member 400 may include a material with high specific heat performance. Accordingly, the filler member 400 increases the thermal mass and may delay the temperature rise of the battery cells 100 even in situations such as rapid charging and discharging of the battery cells 100, thereby preventing a rapid temperature rise of the battery cells 100.

Also, the filler member 400 may include glass bubbles. The glass bubbles may lower the specific gravity of the filler member 400 and increase energy density relative to weight.

Also, the filler member 400 may include a material with high heat resistance performance. Accordingly, the filler member 400 may effectively prevent thermal runaway from propagating to neighboring battery cells when a thermal event occurs due to overheating or the like in at least one specific battery cell 100 among the plurality of battery cells 100.

Also, the filler member 400 may include a material with high flame retardant performance. Accordingly, the filler member 400 may minimize the risk of fire when a thermal event occurs due to overheating or the like in at least one specific battery cell 100 among the plurality of battery cells 100.

Hereinafter, a pack frame 205 according to another embodiment of the battery pack 1 will be described.

FIG. 11 is a diagram for illustrating a pack frame according to another embodiment of the battery pack according to an embodiment of the present disclosure.

Referring to FIG. 11 along with FIG. 2, the pack frame 205 may include a plurality of tube supports 250.

The plurality of tube supports 250 are provided at the bottom of the pack frame 205 and may support the plurality of cooling tubes 300. The venting guide portions 230 may be provided between the plurality of tube supports 250, respectively.

The plurality of tube supports 250 are formed in a predetermined length along the longitudinal direction (X-axis direction) of the cooling tube 300 and may have a groove shape with a predetermined depth in the height direction (Z-axis direction) of the pack frame 205.

As such, in this embodiment, the cooling tubes 300 may be more stably fixed and supported within the pack frame 205 by means of the plurality of tube supports 250 provided in the pack frame 205.

Hereinafter, the heat spread prevention structure and mechanism to prevent heat spread to neighboring battery cells 100 due to thermal runaway when a thermal event occurs in the battery pack 1 according to this embodiment of the present disclosure will be described in more detail.

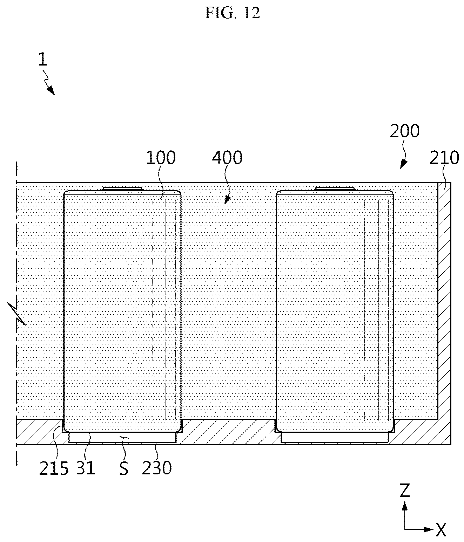

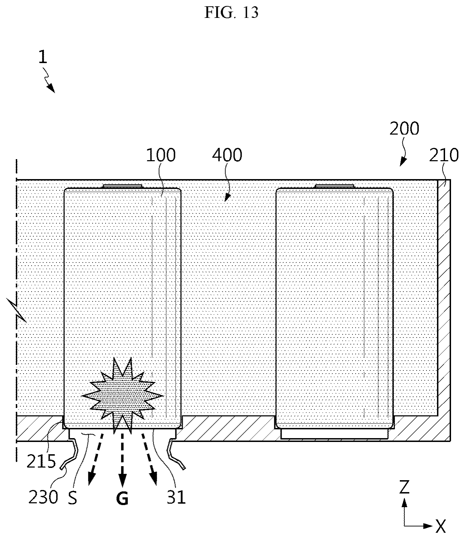

FIG. 12 is a cross-sectional view showing the main part of the battery pack according to an embodiment of the present disclosure, and FIG. 13 is a diagram for illustrating gas emission from the battery cell when a thermal event occurs in the battery pack according to an embodiment of the present disclosure.

Referring to FIGS. 12 and 13, an abnormal situation such as a thermal event may occur due to overheating or the like in at least one specific battery cell 100 among the battery cells 100 of the battery pack 1. At this time, gas G or flame may occur inside the battery cell 100 where the thermal event occurs. If the gas G or the like is not discharged quickly, a greater risk, such as explosion of the battery cell 100, may occur. In this embodiment, the gas G may be discharged quickly to the bottom of the battery cell 100 due to rupture or melting of the venting portion 31.

In addition, in the case of the battery pack 10 according to an embodiment of the present disclosure, depending on the pressure or temperature of the discharged gas G, the venting guide portion 130 disposed to face the venting portion 31 may also rupture or melt so that the gas G or the like may be quickly discharged to the outside of the bottom of the pack frame 200.

At this time, the guide space S of the venting guide portion 130 may more reliably induce the gas coming out of the bottom of the battery cell 100 in a specific direction of the pack frame 200, for example in the lower direction (-Z-axis direction) in this embodiment, thereby guiding more effective directional venting.

Hereinafter, the process of manufacturing the battery pack 10 according to an embodiment of the present disclosure will be described in more detail.

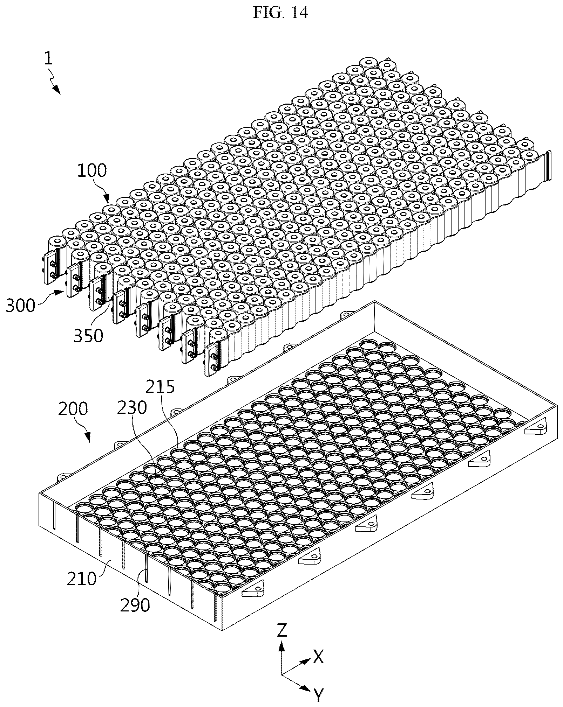

FIGS. 14 to 16 are diagrams for illustrating the process of manufacturing the battery pack according to an embodiment of the present disclosure.

Referring to FIG. 14, a manufacturer or the like may arrange the cooling tubes 300 between the plurality of battery cells 100, respectively. Afterwards, the manufacturer or the like may bond the plurality of battery cells 100 and the plurality of cooling tubes 300 to each other using an adhesive or the like.

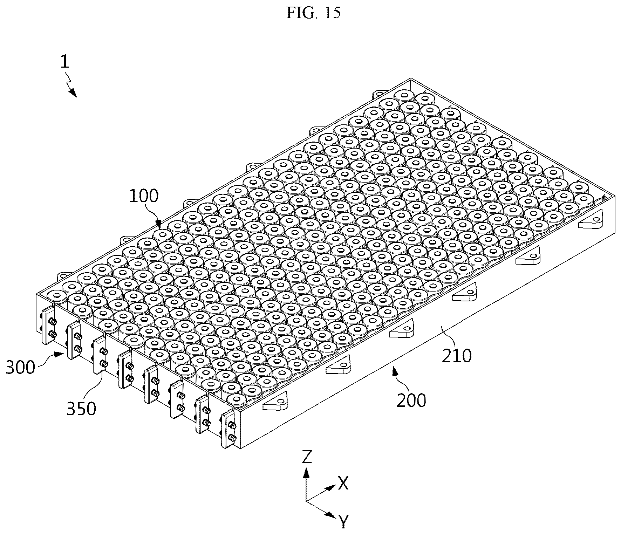

Referring to FIG. 15, the manufacturer or the like may seat the plurality of battery cells 100 and the plurality of cooling tubes 300 in the pack frame 200 to be accommodated within the pack frame 200. At this time, the venting portion 31 (see FIG. 12) provided at the bottom of the plurality of battery cells 100 may be disposed on the guide space S (see FIG. 12) of the venting guide portion 130.

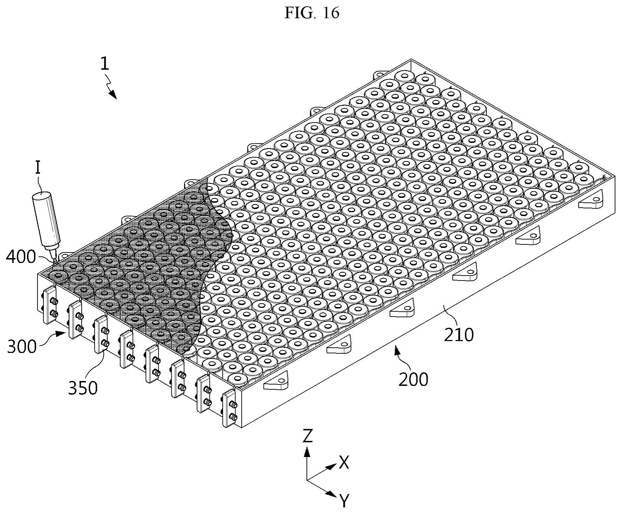

Referring to FIG. 16, the manufacturer or the like may inject the filler member 400 into the pack frame 200 by means of a filler member injection device I. The filler member 400 may be injected after electrical connection through a bus bar assembly is performed on the upper side of the battery cells 100.

The battery pack 1 according to an embodiment of the present disclosure may simplify the manufacturing process by reducing the number of components used during the manufacturing process by applying the pack frame 200 with an integrated frame structure, and may also reduce manufacturing costs, thereby securing cost competitiveness.

Below, battery packs according to various embodiments of the present disclosure will be described in more detail.

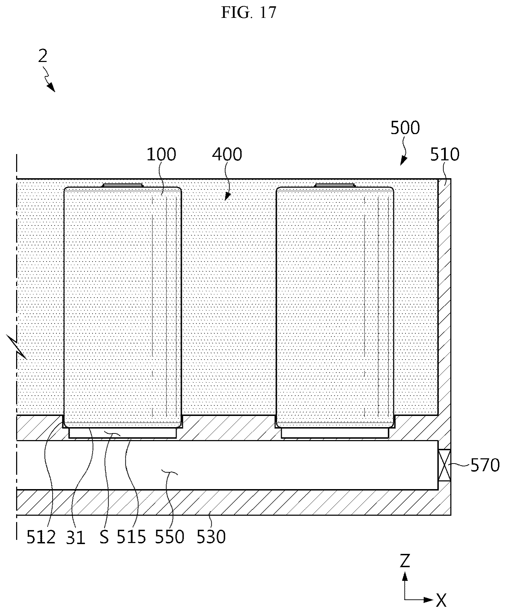

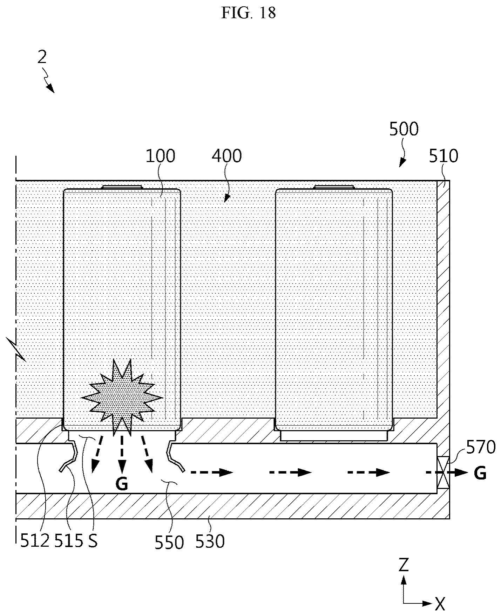

FIG. 17 is a drawing for illustrating a battery pack according to another embodiment of the present disclosure, and FIG. 18 is a diagram for illustrating gas emission from a battery cell when a thermal event occurs in the battery pack according to another embodiment of the present disclosure.

The battery pack 2 according to this embodiment is similar to the battery pack 1 of the former embodiment, so features substantially identical or similar to those of the former embodiment will not be described again, and features different from the former embodiment will be described in detail.

Referring to FIG. 17, the pack frame 500 of the battery pack 2 may include a first frame 510, a second frame 530, a directional venting guide channel 550, and a venting valve 570.

The first frame 510 may accommodate the battery cells 100. In the first frame 510, a cell support 512 and a venting guide portion 515 may be formed at the bottom, like the former embodiment. The first frame 510 may be filled with the filler member 400.

The second frame 530 may be provided at the bottom of the first frame 510. The second frame 530 may be formed integrally with the first frame 510 or may be connected as a separate member.

The directional venting guide channel 550 is formed between the first frame 510 and the second frame 530 and may be provided below the venting guide portions 515 (-Z-axis direction). The directional venting guide channel 550 may be formed to have a predetermined length in a specific direction.

The venting valve 570 is provided in the second frame 530 and may be arranged to face the directional venting guide channel 550. The venting valve 570 may be provided to export the gas G or the like inside the directional venting guide channel 550 to the outside of the second frame 530.

Referring to FIG. 18, when an abnormal situation such as a thermal event occurs in the battery cell 100 of the battery pack 2, the gas G in the battery cell 100 may be guided into the directional venting guide channel 550 through the venting portion 31 at the bottom of the specific battery cell 100 and the venting guide portion 515 at the bottom of the venting portion 31. Afterwards, the gas G or the like may flow along the directional venting guide channel 550 and exit the venting valve 615 out of the second frame 530.

In the case of the battery pack 2 according to an embodiment of the present disclosure, when gas G or the like is discharged from the plurality of battery cells 100 when a thermal event occurs, the gas G or the like escaped from the battery cells 100 may be guided in a specific direction through the directional venting guide channel 550 provided at the bottom of the venting guide portion 130 of the battery pack 2 so that the gas G or the like is collectively exported to the venting valve 570.

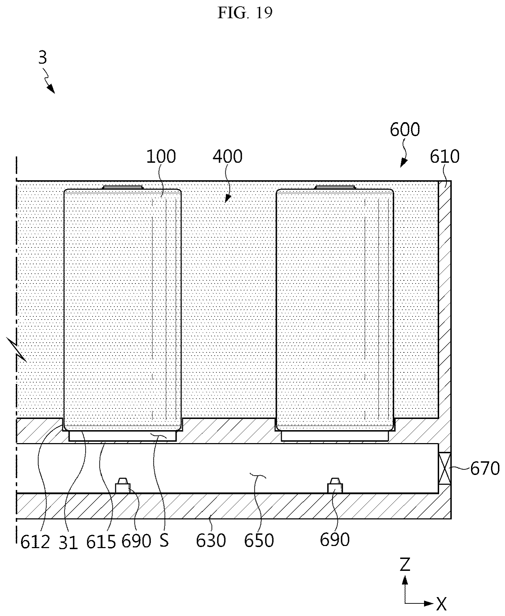

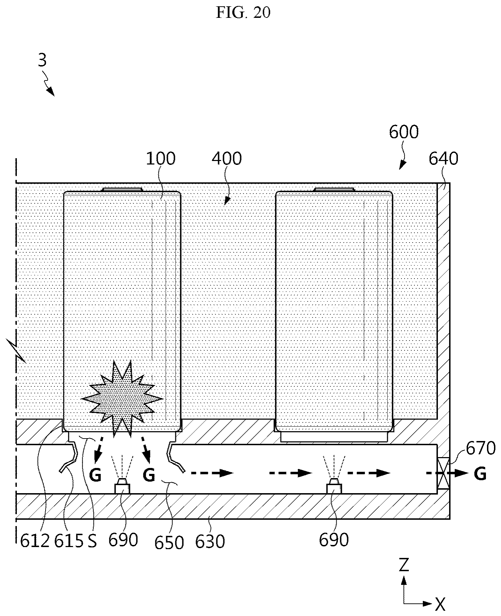

FIG. 19 is a drawing for illustrating a battery pack according to still another embodiment of the present disclosure, and FIG. 20 is a diagram for illustrating gas emission from a battery cell when a thermal event occurs in the battery pack according to still another embodiment of the present disclosure.

The battery pack 3 according to this embodiment is similar to the battery pack 1 of the former embodiment, so features substantially identical or similar to those of the former embodiment will not be described again, and features different from the former embodiment will be described in detail.

Referring to FIGS. 19 and 20, the pack frame 600 of the battery pack 3 may include a first frame 610, a second frame 630, a directional venting guide channel 650, a venting valve 670, and a fire extinguishing unit 690.

In the first frame 610, a cell support 612 and a venting guide portion 615 may be formed. The cell support 612 and the venting guide portion 615 are substantially identical or similar to the cell support 512 and the venting guide portion 515 of the former embodiment, and thus will not be described again.

The second frame 630, the directional venting guide channel 650 and the venting valve 670 are substantially identical or similar to the first frame 510, the second frame 530, the directional venting guide channel 550 and the venting valve 570 of the former embodiment, and thus will not be described again.

The fire extinguishing unit 690 may be provided within the directional venting guide channel 550. The fire extinguishing unit 690 is provided in plurality, and may inject a fire extinguishing material into the directional venting guide channel 550 during the thermal event.

Therefore, the battery pack 3 according to the embodiment of the present disclosure may suppress fire or the like, while guiding venting of the gas G or the like during the thermal event.

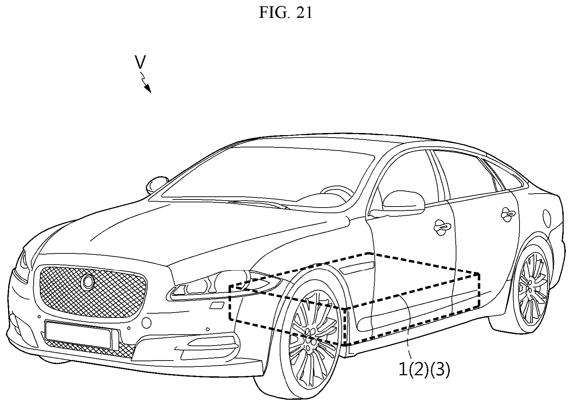

FIG. 21 is a drawing for illustrating a vehicle according to an embodiment of the present disclosure.

Referring to FIG. 21, the vehicle V according to an embodiment of the present disclosure may include at least one battery pack 1, 2, 3 according to the above-described embodiment of the present disclosure. In addition, the vehicle V according to an embodiment of the present disclosure may further include various other components included in a vehicle, in addition to the battery pack 1, 2, 3. For example, the vehicle V according to an embodiment of the present disclosure may further include a vehicle body, a motor, and a control device such as an ECU (electronic control unit), in addition to the battery pack 1, 2, 3 according to an embodiment of the present disclosure.

In addition, the battery pack 1, 2, 3 according to an embodiment of the present disclosure may be provided to other devices, instruments, and equipment, such as an energy storage device (ESS) that uses secondary batteries, in addition to the vehicle V.

According to various embodiments as above, it is possible to provide a battery pack 1, 2, 3 that may prevent heat propagation to adjacent battery cells 100 when a thermal event occurs in a battery cell 100, and a vehicle V including the battery pack.

In addition, according to various embodiments as above, it is possible to provide a battery pack 1, 2, 3 that may simplify the manufacturing process and reduce manufacturing costs, and a vehicle V including the battery pack.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack, comprising:
a plurality of battery cells having a venting portion; and
a pack frame configured to accommodate the plurality of battery cells and having a venting guide portion in an area corresponding to the venting portion of the plurality of battery cells.

2. The battery pack according to claim 1,
wherein the venting guide portion is formed to have a smaller thickness than other parts of the pack frame so as to rupture or melt at a predetermined pressure or temperature or above.

3. The battery pack according to claim 1,
wherein the venting portion is provided at a bottom of the plurality of battery cells, and
wherein the venting guide portion is provided at a bottom of the pack frame.

4. The battery pack according to claim 1,
wherein the venting guide portion has a smaller thickness than a bottom of the pack frame.

5. The battery pack according to claim 1,
wherein the venting guide portion is provided in a number corresponding to the number of the plurality of battery cells.

6. The battery pack according to claim 1,
wherein the pack frame is provided as an integrated plastic frame.

7. The battery pack according to claim 1,
wherein the venting guide portion is formed integrally with the pack frame.

8. The battery pack according to claim 1,
wherein the venting guide portion is provided in a notch shape at a bottom of the pack frame.

9. The battery pack according to claim 1, further comprising:
a plurality of cooling tubes arranged in a predetermined length between the plurality of battery cells and spaced apart from each other by a predetermined distance,
wherein the pack frame includes a plurality of tube supports that support the plurality of cooling tubes.

10. The battery pack according to claim 9,
wherein the venting guide portion is provided between the plurality of tube supports.

11. The battery pack according to claim 9,
wherein the plurality of tube supports are formed in a predetermined length along a longitudinal direction of the cooling tube and have a groove shape with a predetermined depth.

12. The battery pack according to claim 9,
wherein ends of the plurality of cooling tubes are connected to an external cooling line of the battery pack and have a cooling medium inlet/outlet to supply a cooling medium into the cooling tube and export the cooling medium inside the cooling tube to the outside, and
wherein the ends of the plurality of cooling tubes are exposed to the outside of the pack frame.

13. The battery pack according to claim 1,
wherein at least one flange portion is formed integrally with at least one edge of the pack frame.

14. The battery pack according to claim 13,
wherein the flange portion is provided in plurality, and
wherein the plurality of flange portions are arranged to be spaced apart from each other by a predetermined distance along both edges of the pack frame.

15. A vehicle, comprising at least one battery pack according to any one of claims 1 to 14.
